# EUROPEAN PATENT APPLICATION

(11) **EP 4 340 412 A1**
(43) Date of publication of application: **20.03.2024**
(21) Application number: 23198400.6
(22) Date of filing: 19.09.2023
(51) Int. Cl.: H04W 4/90, H04W 24/08

(54) **SYSTEM FOR MONITORING THE OPERATING STATE OF AN EMERGENCY CALL SERVICE**

(30) Priority: 19.09.2022 IT 202200019122
(71) Applicant: Cellnex Italia S.p.A, 00148 Roma (RM) (IT)
(72) Inventor: TENAGLIA, Emilio, 00148 Roma (RM) (IT); ZEI, Gherardo, 00148 Roma (RM) (IT)
(74) Representative: Meindl, Tassilo

(57) **Abstract**

The present invention relates to a system for monitoring mobile radio systems for detecting the operating state of the emergency call service into, in particular motorway, tunnels.

## Description

### Technical field

The present invention relates to a system for monitoring the mobile radio systems for detecting the operating state of the emergency call service in a facility, such as a motorway or tunnel.

### Background

With Regulation UE 2015/758 of the European Parliament and of the Council of 29 April 2015 (concerning type-approval requirements for the deployment of the eCall in-vehicle system based on the 112 service and amending Directive 2007/46/CE), the European Parliament made compulsory starting from 31 March 2018 to instal the device enabled for (ecall) emergency call service on board the newly registered vehicles, wherever they are. Since currently there are still many vehicles not equipped with such device, it is fundamental for drivers' safety to guarantee the availability of the emergency call service through the user's mobile phone by at least a telecommunication operator, even in areas where the mobile radio coverage could be limited or even absent, as in case of tunnels. To this purpose, it is considered to be necessary to be able to perform monitoring of the state of the emergency call service offered by one or more telecommunication operators in one or more tunnels present along a motorway network.

The emergency call, made from one's own mobile phone, is a fundamental service for a driver in a tunnel in an emergency situation, such as for example under conditions of broken-down motor vehicle or driver's health problems.

The emergency call is defined as a phone call made to one single emergency number (for example 112 in Europe, 911 in USA).

It can be made on condition that the following properties result to be checked:
1. UE (User Equipment) enabled for Emergency Calls (also called "not locked")
2. UE registered with a cell of the serving operator (in the "IDLE" mode the strength measurements are received by the radio-base station)
3. UE with SIM/USIM card from a different operator (in this case the UE does not register on the network but it makes directly the emergency call through the network of the present operator)
4. UE without SIM/USIM card (the UE does not register on the network but it makes directly the emergency call through the network of the present operator).

### Object of the invention

The present invention aims at defining the architecture of a system for monitoring the, manual and/or automatic, emergency call service, between a motor vehicle stopped in tunnel and the telephone operator service platform, by avoiding the vehicle abandonment and by guaranteeing that the maximum standard levels of both physical and computer science performance and safety be met.

Such aim is reached by a monitoring device as defined in claim 1 and then a system using them as defined in claim 10. The present invention further relates to a method for monitoring the status of the emergency call service as defined in claim 14. Additional features of the present invention are defined in the corresponding depending claims.

The advantages, together with the features and the use modes of the present invention, will result evident from the following detailed description of preferred embodiments thereof, shown by way of example and not with limitative purposes.

### Brief description of figures

Hereinafter in this description the drawings shown in the enclosed figures will be referred to, wherein:
- Figure 1 shows schematically the general architecture of a system according to the present invention;
- Figure 2 shows schematically an embodiment of a monitoring device according to the present invention; and
- Figure 3 shows an embodiment of the operation of the monitoring device of Figure 2.

### Detailed description of the invention

The present invention will be described hereinafter by making reference to the above-mentioned figures.

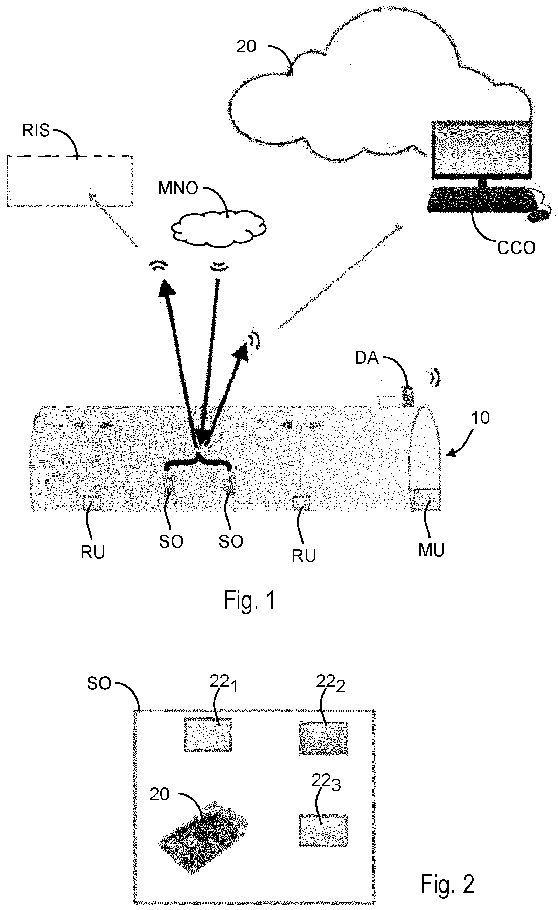

Figure 1 shows schematically the general architecture of a system according to the present invention. Specifically, in Figure 1 is schematically shown a facility 10, such as a tunnel, an underground car park or a subway. The facility 10 is served by one or more mobile network operators MNO. For example, the mobile network coverage of a given operator MNO within the facility 10 may be ensured by installing additional communication equipment of the operator MNO or a signal repetition plant. For example, in the embodiment considered, a Distributed Antenna System (DAS) is installed in the tunnel 10. Substantially, a DAS operates as a signal repetition facility for one or more operators MNO. In general, the DAS may be active or passive.

For example, in various embodiments, an active DAS system comprises a master unit MU configured to manage communication with one or more operators MNO, for example via a so called donor antenna DA. Moreover, the DAS comprises one or more remote units 10, which replicate a mobile communication network within the tunnel 10 based on communication exchanged with the master unit MU.

Accordingly, irrespective of specific solution adopted, the tunnel 10 is served by one or more mobile networks, such as 2G, 3G, 4G and/or 5G networks, provided by one or more network operators MNO.

One of the key elements of the present invention consists of a monitoring device or probe SO. Such probe SO is a device for monitoring the cellular radio coverage and programmable automatic call, for simulating the behaviour of mobile network users and generation of reports relating to the correct operation of the mobile radio network in the installation area, such as the tunnel 10. The device SO is configured to monitor coverage quality and intensity, and verify the successful establishment of phone calls. Therefore, the device SO may be used in the situations in which it is necessary to verify the presence of phone coverage for safety and emergency reasons (for example, in a road sector in a tunnel, in an underground car park and under all similar conditions where it is necessary to be able to contact possible emergency numbers).

Figure 2 shows an embodiment of a probe SO. In various embodiments, the probe SO comprises a programmable microprocessor device 20, for example a Raspberry^{©} device or similar and however functionally equivalent devices, a power supply section and a backup battery (not shown in Figure 2), and one or more modems 22, each equipped with a SIM card, such as an UICC or eUICC, from one of the mobile network operators MNO which provide the service in the system use area, i.e., the facility 10. For example, in the embodiment considered, the monitoring device SO comprises three modems 22₁, 22₂ and 22₃. In general, while reference is mainly made to the testing of the coverage of mobile communication networks, each modem may also be arranged to communicate via other radio networks adapted to transmit voice communications, such as encoded telephone conversions, e.g., Voice Over IP (VOIP) transmitted over a wireless communication channel, such as Wi-Fi (IEEE 802.11 family of standards), Worldwide Interoperability for Microwave Access (WIMAX), LORA or Terrestrial Trunked Radio (TETRA). In this case, the SIM card may be omitted and the access data for the radio network may be stored in any other suitable form. Accordingly, the operators MNO may also include other telecommunication operators managing voice calls over a radio network.

As schematically shown in Figure 1, the probes SO are intended to be installed within the facility 10, such as a tunnel, and are thus exposed to difficult environmental conditions. For example, in various embodiments, the probes SO of the monitoring system object of the present disclosure are arranged in the arches of a tunnel. For this reason, each probe is preferably contained in a container made of stainless steel implemented to guarantee IP54 environmental protection degree and IK10 mechanical protection. In various embodiments, the device SO is configured to operate at a maximum operativity, e.g., in an operating temperature range comprised between - 20°C. and +50°C and it has, for example, compact sizes for an easy positioning, preferably 400 mm x D 200 mm x W 300 mm, or even smaller sizes.

As mentioned before, it is assumed that one or more telecommunication operators MNO (or other operators) have installed systems for repeating signals of their (e.g., mobile) radio system in the facility 10, such as a tunnel arch. The devices associated to such systems are generally designated as Remote Unit RU in Figure 1. In case of an active DAS, such a system may also comprise a master unit MU. Such systems for repeating radio signals are well-known in the art and not part of the present invention.

As shown in Figure 1, in various embodiments, the monitoring system may also comprise a command-and-control centre CCO and optionally one or more automatic responders RIS. Accordingly, in various embodiments, the single device SO comprises transceiver devices 22 (modems) configured to measure the signal strength of the radio signal, e.g., the radio signal received from the RUs belonging to the repeater system of the (e.g., mobile) radio operator MNO present in the facility 10. Moreover, each transceiver device (modem) 22 is configured to effect voice calls. For example, such calls may be to other probes SO in the same tunnel (in case of single-arched tunnels) and/or, in case of two-arched tunnels, to the probes SO present in the other arch. Additionally, the calls may be to the one or more automatic responders RIS. Moreover, in various embodiments, each probe SO is configured to send data to the command-and-control centre CCO of the monitoring system. In general, the transmission of the data to the CCO could be performed via a dedicated communication system. Conversely, in a currently preferred embodiment, the transmission of the data to the CCO is performed via a data link established with at least one of the (e.g., mobile) telephone operators MNO present in the facility 10. Accordingly, in various embodiments, one or more of the transceivers/modems 22 may also support data transmission, e.g., IP communications, whereby the transceiver 22 (and thus the probe SO) is adapted to transmit data to the CCO via the data link established with the respective operator MNO.

The data link may also be used for other functions. For example, in various embodiments, the configuration of a probe SO may be performed remotely, e.g., via a remote connection with the Secure SHell (SSH) protocol and to Secure Copy (SCP) command.

Accordingly, in various embodiments, the calls to other probes SO and optionally the responder RIS, and the data transmission to the command-and-control centre CCO are made by using the (e.g., mobile) radio signal repeater system(s) installed in the facility 10.

In various embodiments, the modems 22 inside the probes SO may be capable of forwarding/making calls by using different mobile radio access technologies, such as 2G, 3G, 4G, 5G, etc. For example, in various embodiments, the probe SO selects the fastest mobile radio access technology supported by the modem 22, such as 5G or 4G. In fact, modern modems 22 are usually configured to use a fall-back a lower mobile radio access technology, such as 3G or 2G, when the modem 22 cannot connect to the MNO with the selected mobile radio access technology. For example, this permits to simulate the behaviour of equipment UE, which connects to an operator MNO based on the mobile radio access technologies, which are available in the facility 10.

Accordingly, in various embodiments, the device SO may detect, which mobile radio access technology is used by a modem 22 and the respective signal strength. For example, usually the modem 22 returns status data indicating the connection status, i.e., disconnected, idle or connected, and the network status indicating, which mobile radio access technology is currently used, such as 2G, 3G, 4G, etc.

In various embodiments, each device SO registers the results of the measurements of received strength and the results of the calls, such as the call attempts to one or more other probes SO and/or the responder RIS, and communicates such results to the command-and-control centre CCO (via the data link).

As mentioned before, in various embodiments, the system may include one or more automatic responders RIS, which can be queried by the probes SO by calls vehiculated through one or more networks of the mobile radio operators, which have installed systems in the tunnel 10. The use of the responders within the operating procedures of the subject system will be illustrated hereinafter in the present document.

Accordingly, in various embodiments, each probe SO, and optionally also the responder RIS, is configured to send via a data link the information acquired in the facility towards the command-and-control centre CCO for the subsequent processing aimed at determining the (active or not active) operating state of the emergency call service in the facility 10. The command-and-control centre CCO for example can be installed inside a data centre, i.e., a cloud. For example, this is schematically shown in Figure 1, wherein the CCO is connected to a Wide Area Network (WAN) 20, such as internet.

Accordingly, in various embodiments, the command-and-control centre CCO receives from each device SO the status of each modem 22, such as the signal strength and the connection status, such as IDLE or CONNECTED, associated with the respective operator MNO. The status may also include the used mobile radio access technology, such as 2G, 3G or 4G. Moreover, the command-and-control centre CCO receives the status report of the calls made by the probes SO and optionally the status report of the calls received by the probes SO and/or the calls received by the RIS.

In various embodiments, the command-and-control centre CCO may also receive further status data, such as system self-diagnosis alarms, e.g., from the DAS, the probes SO and/or the responder(s) RIS. In various embodiments, the command-and-control centre CCO may also receive a system status for the facility 10, such as for the tunnel or each arch of the tunnel. Accordingly, in various embodiments, the command-and-control centre CCO is able to collect, e.g., store to a database, one or more of:
- System self-diagnosis alarms (DAS (Distributed Antenna System), probes, responders)
- Functionality for checking the emergency call:
- (IDLE) Status of the main operators for 2G, 3G and 4G
- Emergency call status
- System status for each arch.

In various embodiments, the IT platform implementing CCO may also process the received data. For example, as mentioned before, by using the modems 22, each SO performs measurements of the strength level of the radio signal present in the facility 10. For example, the measurement may be performed for each operator and optionally for each communication technology. Accordingly, in various embodiments, the CCO may determine the presence of one or more mobile network operators MNO in the facility 10 and the operating state (IDLE or CONNECTED) of each modem 22 of the probes SO installed in the facility, such as a tunnel or tunnel arch, optionally for each communication technology, such as for example 2G, 3G and 4G. In various embodiments, e.g., based on the connection status and the signal strength, the CCO may also classify the quality of the connected, e.g., into excellent, good, degraded or absent.

Moreover, as mentioned before, in various embodiments, by using the modems 22, each device SO makes one or more calls to one or more other devices SO present in the facility 10, such as in the same tunnel (arch) and/or in the other arch in case of double-arched tunnel. Accordingly, e.g., by processing the call reports, the CCM may determine the (OPERATING or NOT OPERATING) state of the emergency call service offered by one or more of the mobile radio operators present in the tunnel.

Accordingly, by processing the received data, the IT platform implementing CCO may:
a. determine the presence of one or more mobile network operators MNO in the facility 10, optionally for each communication technology, such as 2G, 3G and 4G;
b. determine the operating state (IDLE or CONNECTED) of the probes SO installed in the facility 10; and
c. determine the (OPERATING or NOT OPERATING) state of the emergency call service offered by one or more of the mobile radio operators MNO serving the facility 10.

In various embodiments, the CCO may also provide an access for a user or operator in order to inspect the collected and/or processed data. For example, in this way, the CCM may provide diagnostics information about the operating state of the monitoring system. As mentioned before, the various information may be associated to a given tunnel or tunnel arch, i.e., the information may be provided at the level of the single arch and/or tunnel.

As mentioned before, in various embodiments, by using the modems 22, each device SO makes one or more calls to one or more other devices SO, preferably installed in the same facility, such as device SO present in the same tunnel (arch) and/or in another arch. Specifically, in order to simulate an emergency call, it would be sufficient that each device SO effects with each modem 22 a call to the responder RIS. However, when installing a significant number of devices SO in various facilities 10, the responder RIS would need a significant number of lines in order to manage the calls. Conversely, according to various embodiments of the present inventions, each probe SO first tries calls to other probes SO, and the responder RIS is used as backup when the probe SO is unable to establish a call with another probe SO.

Accordingly, in this case, each probe SO is configured to make a number K (with K ≥ 1) of call attempts by using the installed modems 22, one for each one of the N (with N ≥ 1) (e.g., mobile) radio operators MNO present in the tunnel. If all N*K call attempts fail, the probe makes a number L (with L ≥ 1) call attempts to the responder RIS. In various embodiments, if also these L attempts fail, a fault is detected, with possibility of rebooting the same probe.

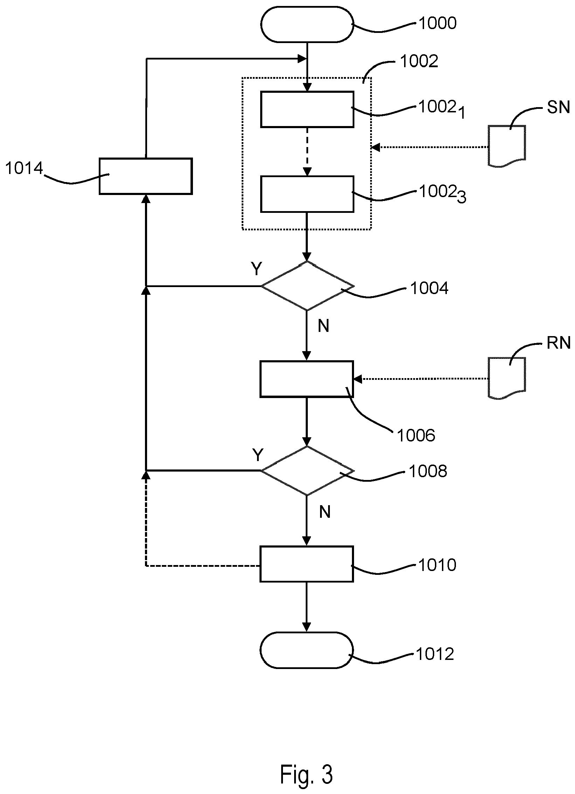

For example, Figure 3 shows a possible embodiment of the operation of the monitoring device SO, e.g., implemented via software instructions executed by the microprocessor 20. Specifically, after a start step 1000, the probe SO proceeds to a step 1002 for making for each of the N modems 22, e.g., N = 3, a respective number of call attempts K according to a given schedule. For example, as schematically shown in Figure 3, the probe SO may access at the step 1002 a list or schedule SN comprising telephone numbers of other probes SO to be called according to a given schedule. As mentioned before, the probe SO may also obtain further data from each modem 22, such as the connection status, the communication technology and the respective signal strength.

The probe then proceeds to a step 1004 where the probe SO verifies whether at least one call attempt was successful. In case at least one call attempt was successful (output "Y" of the verification step 1 004), the probe SO returns to the step 1002.

Conversely, in case all N*K call attempts failed (output "N" of the verification step 1004), the probe SO proceeds to a step 1006 where the probe makes L (with L ≥ 1) call attempts to the responder RIS. For example, as schematically shown in Figure 3, the probe SO may access at the step 1006 a configuration file RN comprising telephone number(s) of one or more automatic responders RIS.

The probe then proceeds to a step 1008 where the probe verifies whether at least one call attempt to the RIS was successful. In case at least one call attempt was successful (output "Y" of the verification step 1008), the probe SO returns to the step 1002. Conversely, if also these L attempts fail (output "Y" of the verification step 1008), the probe SO proceeds to an error handling step 1010.

Based on the operations implemented in the step 1010, the operation of the probe SO may be stopped at a stop step 1012, e.g., in case of a hardware failure, or the probe SO may return to the step 1002 or 1006. For example, the various embodiments, the probe reboots the modems 22 at the step 1010 and returns to the step 1002 (for calling a probe SO) or to the step 1006 (for calling the RIS). Alternatively, the probe SO may be rebooted at the step 1010, whereby the probe 10 returns implicitly to the step 1002 after the reboot. For example, in various embodiments, the probe SO is rebooted, when the probe SO reaches the step 1010 for a given number of times.

Finally, as described in the foregoing, the probe SO sends a report to the command-and-control centre CCO, e.g., prior to returning to the step 1002, as schematically shown via a step 1014. For example, in various embodiments, the probe SO stores locally, for example in a JSON file, the collected data. Moreover, thanks to the (data) connection with one or more of the operators MNO, the probe SO may send the collected data, e.g., the JSON file, to the command-and-control centre CCO, preferably after having checked the presence of Internet connection. For example, for this purpose, the probe SO may send every T seconds a header request to an Internet server. The connection with the command-and-control centre CCO preferably takes place through HTTP protocol after having exchanged a safety token of BEARER TOKEN, standard OAUTH2 type. The transmission then takes place through an encrypted tunnel.

Accordingly, in various embodiments, the probe SO is configured to effect two type of call attempts, i.e., to another probe SO or the RIS. Specifically, in various embodiments, in order to execute a call attempt, the probe SO requests a voice call to a given telephone number. In a complementary manner each probe SO and the automatic responder are configured to monitor incoming voice calls and, once having detected an incoming voice call, automatically respond to the incoming voice call, thereby establishing a voice connection.

For example, as well-known in the art, the interaction with a modem 22 is usually handled via AT commands. For example, in response to a given AT command, such as "ATD" followed by a telephone number, the modem tries to establish a voice connection with a telephone number indicted in the AT command. Specifically, based on the outcome of the connection, the modem returns then a status code, which indicates whether a connection has been established or not. In this respect, a functional voice connection is established when the given telephone number responds to the call, i.e., the when the caller and the responder are connected to the network. However, usually, an operator also responds with a standard voice message, when the responder is not reachable, but the caller is connected to the network. In this respect, the inventors have observed that these two cases may be distinguished by requesting the voice connection status of the respective modem 22. For example, in many modems the status code may be requested via the command "AT+CLCC". For example, the status code may be set to "2" for an automatic respond from the operator MNO and "4" for a response from another probe SO.

Accordingly, the probe SO may effect a call attempt at the step 1002 by requesting a voice connection to a given telephone number associated with another probe SO, e.g., via the command "ATD". In response to the request, the probe SO receives from the modem 22 a status message indicating whether a voice connection was established, e.g., signalled via a response "OK", or not, e.g., signalled via other status messages, such as "NO CARRIER", "BUSY", "NO ANSWER", "ERROR", "OPERATION NOT ALLOWED" or "UNKNOWN CALLING ERROR". Accordingly, in response to determining that a voice connection was established, the probe SO may obtain the respective voice connection status code, e.g., via the command "AT+CLCC", which indicates whether a connection to an automatic responder (also called disc) has been established, e.g., status code "2", or a real voice connection has been established, e.g., status code "4".

Accordingly, in response to detecting that a real voice connection has been established, the probe SO classifies the attempt as successful. Otherwise, the probe classifies the attempt as unsuccessful/fail and optionally the probe SO may proceed with a next call attempt for the same telephone number. Accordingly, in various embodiments, the probe SO may verify at the step 1004 whether the status code of at least one call attempt indicates that a real voice connection has been established (e.g., status code "4").

Conversely, when calling the automatic responder RIS, preferably this responder RIS is configured to declare itself as an automatic responder. Accordingly, when calling the responder RIS, the probe SO should obtain a status code indicating that a connection to an automatic responder has been established. Accordingly, in various embodiments, the probe SO may verify at the step 1008 whether the status code of at least one call attempt indicates that a voice connection to an automatic responder has been established (e.g., status code "2").

In general, once a voice connection has been established, e.g., because the modem established a voice call with another probe, the automatic responder RIS or with a responder of an operator MNO, the probe SO may disconnect the voice call after a given time period, e.g., selected between 1 and 10 seconds.

As mentioned before, calling first one or more of the other probes SO has the advantage that the responder RIS may have less lines. Moreover, the connection status and operativity of a given probe may also be verified by monitoring the incoming voice calls.

In this respect, as mentioned before, each probe SO comprises preferably a plurality of N modems, such as three modems, wherein each modem is arranged to be connected to the network of a given operator MNO. Accordingly, in order to determine the correct operation of all connections, the probe SO should call via a given operator MNO, i.e., via a respective modem, all operators MNO serving the facility 10. For example, in case each probe SO has three modems, the probe SO should effect via the first modem 22₁ three call attempts to three different telephone numbers, wherein each telephone number is associated with a different operator MNO. Similarly, three call attempts should be effected with the second modem 22₂ and the third modem 22s. Thus, in principle N*N calls should be made.

However, as mentioned before, in various embodiments, the probes SO installed in the facility 10 may be organized to form pairs, such as two probes in the same arch or in two different arches of the tunnel. Specifically, in this case, it is sufficient that the two probes are configured to verify the N*N calls. Moreover, the inventors have observed that, once each of the two probes MNO was able to effect a voice call with a given operator MNO, it is useless to verify a voice call between the probes using this operator. Accordingly, in various embodiments, the two probes are configured to effect N*(N-1) calls, e.g., six calls for three modems 22/operators MNO. Preferably, these calls are distributed evenly between the two probes SO.

For example, in various embodiments, a first probe SO comprises three modems 22_{1,1}, 22_{1,2} and 22_{1,3} associated with three operators MNO1, MNO2 and MNO3, with respective telephone numbers SO1N1, SO1N2, SO1N3, and a second probe SO comprises three modems 22_{2,1}, 22_{2,2} and 22_{2,3} associated with the same operators MNO1, MNO2 and MNO3, with respective telephone numbers SO2N1, SO2N2, SO2N3. In this case, the probes SO may be configured to effect the following calls:

| Time | Caller | Number |
|---|---|---|
| T1 | 22_{1,1} (MNO1) | SO2N2 (MNO2) |
| T2 | 22_{1,2} (MNO2) | SO2N3 (MNO3) |
| T3 | 22_{1,3} (MNO3) | SO2N1 (MNO1) |
| T4 | 22_{2,1} (MNO1) | SO1 N2 (MNO2) |
| T5 | 22_{2,2} (MNO1) | SO1 N3 (MNO3) |
| T6 | 22_{2,3} (MNO1) | SO1 N1 (MNO1) |

Accordingly, in the embodiment considered, each probe SO is configured to call with each modem 22 a different destination telephone number associated with a different operator MNO. Moreover, in various embodiments, the destination telephone numbers called by a given probe SO are managed by another probe SO in the same facility 10. Generally, instead of performing N*(N-1) calls, this scheme may also be applied to a higher number of modems 22, such as four or five modems 22.

For example, this is also shown in Figure 3, wherein the step 1002 comprises for each modem 22 a respective sub-step, such as steps 1002₁, 1002₂ and 1002₃, wherein the probe SO effects in each step one or more calls to a respective telephone number as indicated via the data SN. Specifically, in various embodiments, the probe SO is configured to make with each modem 22 a given maximum number K of call attempts to the same telephone number, wherein the respective telephone number is managed by an operator MNO being different from the operator MNO to which the respective modem 22 is connected. Moreover, the telephone numbers called by the modems 22 of a device SO are different and managed by different operators MNO for each modem. As mentioned before, preferably the telephone numbers called by a given device SO are associated with the same further device SO.

As mentioned before, various of the above operations may be implemented via software. For example, the IT platform which implements the command-and-control centre CCO may provide, e.g., via a web service or a web page, one or more status information. For example, as mentioned before, such information may include system self-diagnosis alarms for each component, such as DAS alarms, probe alarms, responder alarms, the status of the emergency call showing the possibility of the emergency call in the whole tunnel, system status for each arch, system status for each tunnel and/or (Idle) probe status.

Conversely, each probe SO installed in the facility 10 may implement, e.g., via respective software tasks, a plurality of operating procedures. For example, a first procedure or software task may handle the process for monitoring coverage checking measurements. For example, this procedure may perform the measurements for verifying the radio coverage by measuring the signal strength for each single modem 22. As described in the foregoing, for this purpose, the probe SO uses the modems inside thereof to measure the radio signal, e.g., in IDLE state, and store locally the collected data, for example, on a file.

Conversely, a second procedure or software task may handle the process for monitoring call tests. As described in the foregoing, e.g., with respect to Figure 3, the probe SO makes calls to other probes SO and optionally the responder RIS. In various embodiments, each device SO may also select one or more communication technologies made available by that operator (or the respective modem 22 may select automatically a given communication technology). Accordingly, by using the selected technology, the probe SO makes the call attempts (Nr. K for each one of the N modems) to another device SO. For example, in various embodiments, if all Nr. K attempts fail, a recovery algorithm is launched. Specifically, during the recovery algorithm, the probe is configured to:
a. make a call to the responder RIS (if present) by using a given modem 22 associated with an operator MNO by using the selected communication technology (see above);
b. in case of a negative response to the call to the responder RIS, another modem is selected (of another operator MNO, with the same or another communication technology), and the call to responder RIS is repeated (step a); and
c. if no call to the responder RIS is successful, the reset of the modems 22 is performed and the procedures of preceding points a and b, are repeated.

Accordingly, after having reset the modems, the recovery is successful if at least one call to the responder RIS is successful. In this case, the fact that the recovery was successful may be registered. Conversely, the recovery is not successful when it was not possible to contact the responder RIS. In this case the probe SO may be rebooted, or the probe may store only data indicating that the recovery was not successful (false recovery).

Accordingly, in the embodiment considered, the recovery algorithm implements the steps 1006, 1008 and 1010 of Figure 3.

Finally, a third procedure or software task may handle the process for controlling alarms inside the device SO. For example, in various embodiments, the device SO verifies periodically the operating state of the modems 22 installed inside the device SO itself and the relative configuration (including date and time). Moreover, the device SO may verify periodically the operating state of the internal hardware. For example, in case one of the two checks is negative, a hardware failure may be declared which could require a local intervention of a system operator. In general, the operation check of the internal hardware and of the modems 22 inside the device SO may also be launched after a negative result of the recovery algorithm (described previously), i.e., when it was impossible to establish a call with the responder RIS. Also in this case, if the hardware check has a negative result, it could be requested a local intervention of the system operator.

Accordingly, various embodiments of the present disclosure relate to a device SO for monitoring cellular radio coverage in a facility 10, e.g., a tunnel, served by at least one mobile telephone operator MNO. In various embodiments, the device SO is assembled in a stainless-steel enclosure implemented to guarantee IP54 environmental protection degree and IK10 mechanical protection.

In various embodiments, the device SO comprises a programmable microprocessor device 20, a power supply section and a backup battery, and one or more modems 22, wherein each modem 22 is equipped with a SIM card from a different telephone operator. For example, the microprocessor may be a Raspberry^{©} device, or a functionally equivalent device.

In various embodiments, the microprocessor device 20 is programmed to perform the following operations: make measurements of the signal strength received, e.g., from a repeater system present in the facility 10, call other probes SO and an automatic responders RIS, and send data to a remote command-and-control centre CCO. For example, in various embodiments, the probe SO may make the measurement of the signal strength, when the respective modem is in an idle state. Moreover, the probe SO and/or the centre CCO may classify the signal strength as excellent, good, degraded or absent. In various embodiments, when a given signal strength associated with a given modem 22 is classified as absent or degraded, the probe SO and/or the centre CCO may automatically alert the respective operator MNO. In various embodiments, the probe SO may also be configured to perform with one or more of the modems 22 a speed test to verify the velocity of a respective data connection.

Specifically, in various embodiments, the microprocessor 20 is programmed, e.g., via the step 1002, to make a number K (with K ≥ 1) of call attempts by using the installed modems 22, one for each one of the N (with N ≥ 1) mobile radio operators MNO serving the facility. For example, as described in the foregoing, when the device SO comprises a plurality of modems 22, the microprocessor 20 may be configured to make with each modem 22 a given number K of calls to a single predetermined telephone number, wherein the telephone number is managed by an operator MNO being different from the operator associated with the modem 22 used to make the call. Moreover, in various embodiments, the telephone number is associated with the SIM card inserted in a modem of a further device SO installed in the same facility 10. Accordingly, in various embodiments, each device SO is also configured to respond to voice calls.

In various embodiments, if all N*K call attempts fail, the microprocessor 20 is programme to make, e.g., at the step 1006, a number L (with L ≥ 1) call attempts to an automatic responder RIS, and if the L call attempts to the automatic responder RIS also fail, a fault is detected, e.g., at the step 1010. As mentioned before, in response to a fault, the microprocessor 20 may be configured to perform a reset of the modems 22 and/or the device SO.

In various embodiments, in response to establishing a voice connection, the microprocessor 20 is configured to obtain the respective voice connection status and verify whether the voice connection status corresponds to an expected status, e.g., a real voice call for a call attempt to another probe SO and an auto responder for a call attempt to the responder RIS.

Accordingly, various embodiments also relate to a corresponding system for monitoring the cellular radio coverage in a facility served by at least one mobile telephone operator MNO. Specifically, such a system comprises one or more devices SO configured to be installed in the facility and a command-and-control centre CCO configured to receive data from the devices SO and determine an operating state of the emergency call service in the facility. In various embodiments, the system also comprises the one or more automatic responders RIS configured to receive calls from the devices SO. However, the automatic responders RIS may also be provided by a different provider.

Accordingly, various embodiments also relate to a corresponding method for monitoring cellular radio coverage in a facility served by at least one mobile telephone operator MNO. The method comprises providing one or more devices SO and making through one of said devices SO a number K (with K ≥ 1) of call attempts for each of the N (with N ≥ 1) modems of the device 10. Specifically, in various embodiments, two devices SO installed in the same facility 10 are arranged to form a set and each device SO is configured to call the other device of the set. Moreover, the method comprises, if all N*K call attempts fail, making a number L (with L ≥ 1) of call attempts to an automatic responder RIS. If the L call attempts to the automatic responder RIS also fail, a fault is detected. Specifically, in various embodiments, the calls between the probes SO of a given pair are made in a cross-mode, between modem/calling operator and modem/receiving operator, which permits to very multiple operators at the same time and to decrease the overall capacity of the responder RIS.

The present invention has been so far described with reference to preferred embodiments thereof. It is to be meant that each one of the technical solutions implemented in the preferred embodiments, herein described by way of example, can advantageously be combined, differently from what described, with the other ones, to create additional embodiments, belonging to the same inventive core and however all within the protective scope of the herebelow reported claims.

## Claims

1. A monitoring device (SO) for monitoring cellular radio coverage in a facility (10) served by at least one mobile telephone operator (MNO), comprising:
- a programmable microprocessor device (20);
- a power supply section and a backup battery;
- a number N (with N ≥ 1) of modems (22), each one equipped with a SIM card from a different telephone operator (MNO),
wherein said microprocessor device (20) is programmed to:
a. obtain from each modem (22) measurements of the signal strength of a radio signal received by the respective modem (22);
b. make a voice call (1002) to a further monitoring device (SO);
c. make a voice call (1006) to an automatic responder (RIS); and
d. send (1014) data to a remote command-and-control centre (CCO).

2. The device according to claim 1, wherein said microprocessor (20) is programmed to:
e. respond to a voice call received from said further monitoring device (SO).

3. The device according to claim 1 or claim 2, wherein said microprocessor (20) is programmed to:
- make (1002) with each of said N modems (22) a number K (with K ≥ 1) of call attempts to said further monitoring device (SO);
- in response to determining (1004) that all N*K call attempts fail, make (1006) a number L (with L ≥ 1) of call attempts to said automatic responder (RIS); and
- in response to determining (1008) that said L call attempts to said automatic responder (RIS) also fail, detect (1010) a fault.

4. The device according to claim 3, wherein making (1002) a call attempt to said another monitoring device (SO), comprises:
- sending a request for a voice call to a said modem (22), said request comprising a given telephone number of a SIM card of a modem (22) of said further monitoring device (SO);
- receiving from said modem (22) a response status indicating whether a voice connection was established or not;
- in response to determining that a voice connection has been established, request a voice connection status code from said modem (22), said voice connection status indicating whether a real voice connection was established or an automatic responder has responded;
- in response to determining that said voice connection status code indicates that a real voice connection has been established, classify the call attempt as successful; and
- in response to determining that a voice connection has not been established or said voice connection status code does not indicate that a real voice connection has been established, classify the call attempt as failed.

5. The device according to claim 3 or claim 4, wherein making (1006) a call attempt to said automatic responder (RIS), comprises:
- sending a request for a voice call to a said modem (22), said request comprising a telephone number of said automatic responder (RIS);
- receiving from said modem (22) a response status indicating whether a voice connection was established or not;
- in response to determining that a voice connection has been established, request a voice connection status code from said modem (22), said voice connection status indicating whether a real voice connection was established or an automatic responder has responded;
- in response to determining that said voice connection status code indicates that an automatic responder has responded, classify the call attempt as successful; and
- in response to determining that a voice connection has not been established or said voice connection status code does not indicate that an automatic responder has responded, classify the call attempt as failed.

6. The device according to any of claims 3 to 5, wherein said making (1002) a number K (with K ≥ 1) of call attempts with a modem (22) comprises making said given number K of call attempts to a predetermined telephone number, wherein said predetermined telephone number is managed by a different telephone operator (MNO) then the telephone operator (MNO) of the SIM card inserted in said modem (22).

7. The device according to any of claims 3 to 6, wherein said microprocessor (20) is programmed to:
- in response to detecting a fault, reboot said modems (22) and make (1006) again a number L (with L ≥ 1) of call attempts to said automatic responder (RIS).

8. The device according to any of the previous claims, wherein the microprocessor (20) Is programmed to transmit a report including said measurement signal strengths and the result of said voice calls to said remote command-and-control centre (CCO) via a data link established between at least one of said modems (22) and the respective telephone operator (MNO).

9. The device according to any of the previous claims, wherein said microprocessor is a Raspberry^{©} device, or a functionally equivalent device, and/or the device is assembled in a stainless-steel enclosure implemented to guarantee IP54 environmental protection degree and IK10 mechanical protection.

10. A system for monitoring the cellular radio coverage in a tunnel served by at least one mobile telephone operator comprising:
- one or more monitoring devices (SO) according to any of the previous claims 1 to 9;
- a command-and-control centre (CCO) configured to receive data from said devices (SO) and determine an operating state of the emergency call service into said tunnel.

11. The system according to claim 10, further comprising one or more automatic responders (RIS) configured to receive calls from said devices (SO).

12. The system according to Claim 10 or Claim 11, wherein said one or more monitoring devices (SO) comprises a first monitoring device (SO) and a second monitoring device (SO) installed in a facility (10), wherein the microprocessor device (20) of said first monitoring device (SO) is programmed to make (1002) with each modem (22) of said first monitoring device (SO) a number K (with K ≥ 1) of call attempts to said second monitoring device (SO), and wherein the microprocessor device (20) of said second monitoring device (SO) is programmed to make (1002) with each modem (22) of said second monitoring device (SO) a number K (with K ≥ 1) of call attempts to said first monitoring device (SO).

13. The system according to Claim 12, wherein said first monitoring device (SO) comprises three modems having SIM cards of a first, second and third telephone operator (MNO), whereby each modem of said said first monitoring device (SO) has associated a respective different telephone number, and wherein said second monitoring device (SO) comprises three modems having SIM cards of said first, said second and said third telephone operator (MNO), whereby each modem of said said second monitoring device (SO) has associated a respective different telephone number,
wherein the microprocessor device (20) of said first monitoring device (SO) is programmed to:
- make (1002) with the first modem (22) of said first monitoring device (SO) a number K (with K ≥ 1) of call attempts to the telephone number associated with the second modem of said second monitoring device (SO),
- make (1002) with the second modem (22) of said first monitoring device (SO) a number K (with K ≥ 1) of call attempts to the telephone number associated with the third modem of said second monitoring device (SO), and
- make (1002) with the third modem (22) of said first monitoring device (SO) a number K (with K ≥ 1) of call attempts to the telephone number associated with the first modem of said second monitoring device (SO); and
wherein the microprocessor device (20) of said second monitoring device (SO) is programmed to:
- make (1002) with the first modem (22) of said second monitoring device (SO) a number K (with K ≥ 1) of call attempts to the telephone number associated with the second modem of said first monitoring device (SO),
- make (1002) with the second modem (22) of said second monitoring device (SO) a number K (with K ≥ 1) of call attempts to the telephone number associated with the third modem of said first monitoring device (SO), and
- make (1002) with the third modem (22) of said second monitoring device (SO) a number K (with K ≥ 1) of call attempts to the telephone number associated with the first modem of said first monitoring device (SO).

14. A method for monitoring cellular radio coverage in a facility (10) served by at least one mobile telephone operator, comprising the steps of:
- installing a first and a second monitoring devices (SO) according to any of the previous claims 1 to 9 in said facility (10);
- making with each of said N modems (22) of said first monitoring devices (SO) a number K (with K ≥ 1) of call attempts to said second monitoring device (SO);
- if all N*K call attempts fail, making a number L (with L ≥ 1) of call attempts to an automatic responder (RIS);
- if the L call attempts to the automatic responder also fail, detect a fault.

15. The system according to Claim 14, wherein said first monitoring device (SO) comprises three modems having SIM cards of a first, second and third telephone operator (MNO), whereby each modem of said said first monitoring device (SO) has associated a respective different telephone number, and wherein said second monitoring device (SO) comprises three modems having SIM cards of said first, said second and said third telephone operator (MNO), whereby each modem of said said second monitoring device (SO) has associated a respective different telephone number, wherein the method comprises the steps of:
- making (1002) with the first modem (22) of said first monitoring device (SO) a number K (with K ≥ 1) of call attempts to the telephone number associated with the second modem of said second monitoring device (SO),
- making (1002) with the second modem (22) of said first monitoring device (SO) a number K (with K ≥ 1) of call attempts to the telephone number associated with the third modem of said second monitoring device (SO),
- making (1002) with the third modem (22) of said first monitoring device (SO) a number K (with K ≥ 1) of call attempts to the telephone number associated with the first modem of said second monitoring device (SO),
- making (1002) with the first modem (22) of said second monitoring device (SO) a number K (with K ≥ 1) of call attempts to the telephone number associated with the second modem of said first monitoring device (SO),
- making (1002) with the second modem (22) of said second monitoring device (SO) a number K (with K ≥ 1) of call attempts to the telephone number associated with the third modem of said first monitoring device (SO), and
- making (1002) with the third modem (22) of said second monitoring device (SO) a number K (with K ≥ 1) of call attempts to the telephone number associated with the first modem of said first monitoring device (SO).
